# EUROPÄISCHE PATENTSCHRIFT

(11) **EP 2 772 131 B1**
(45) Veröffentlichungstag und Bekanntmachung des Hinweises auf die Patenterteilung: **16.09.2015**
(21) Anmeldenummer: 13180678.8
(22) Anmeldetag: 16.08.2013
(51) Int. Cl.: A01G 1/00, A01C 1/04, A01G 31/00

(54) **Rasen-Pad**
Turf pad
Carré de gazon

(43) Veröffentlichungstag der Anmeldung: 03.09.2014
(73) Patentinhaber: COMPO GmbH & Co.KG, 48157 Münster (DE)
(72) Erfinder: Stevens, Walter, 9150 Kruibeke (BE)
(74) Vertreter: Féaux de Lacroix, Stefan

(56) Entgegenhaltungen:
- DE-A1-102006 038 901
- JP-A- H09 154 399
- KR-A- 20070 034 243
- KR-U- 20090 008 141
- US-B2- 7 587 856

## Beschreibung

Die Erfindung betrifft ein Rasen-Pad, ein Verfahren zu seiner Herstellung und seine Verwendung zur Ausbesserung und Reparatur von Kahlstellen und Lücken in bestehenden Rasenflächen.

Kahlstellen und Lücken in bestehenden Rasenflächen werden üblicherweise durch Bestreuen mit Rasensaat oder Einfügen von Rollrasenstücken beseitigt.

In neuerer Zeit kann auch eine anwendungsfertige Mischung aus Rasensaat, Keimsubstrat und Düngemittel in Granulatform ausgebracht werden. Als Keimsubstrat dient dabei ein spezielles Granulat aus Schalen der Kokosnuss, das das Wasser wie ein Schwamm aufnehmen soll, die Saatsamen feuchthalten und sie in eine Schutzschicht einschließen soll. Zusammen mit dem enthaltenen Dünger werden die Samen mit Wasser und Nährstoffen versorgt. Sie keimen und entwickeln sich dadurch schneller. Das Bewässern ist einfach, da das Keimsubstrat beim Trocknen eine hellbraune Farbe annimmt, die bei erneutem Bewässern sich in eine dunkelbraune Färbung ändert. Bei der Anwendung wird das Produkt auf Kahlstellen in einer möglichst gleichmäßig dicken Schicht von beispielsweise 3 mm Schichtdicke ausgebracht.

Derartige Granulate werden beispielsweise von Scotts CELAFLOR Handelsgesellschaft mbH unter der Bezeichnung SUBSTRAL^{®} Magisches Rasen-Pflaster^{®} oder von Barenbrug USA unter der Bezeichnung Vigoro^{®} Certain Seed^{®} vertrieben.

Derartige Granulate sind ferner in der US 7,587,856 B2 beschrieben, die ein komprimiertes Wachstumsmedium betrifft. Die dort beschriebenen Substrate sind typischerweise Pellets, die zudem mit einem wasserbindenden Polymer vermischt sind.

Die verschiedenen Mischungen weisen eine Reihe von Nachteilen auf: Da die Rasensaat, das Granulat aus Schalen der Kokosnuss und das Düngemittel unterschiedliche Größen und Dichten aufweisen, kann es zu einer Entmischung in dem Vorratsgefäß vor der Ausbringung kommen. Eine ungleichmäßige Verteilung des Verhältnisses von Rasensaat, Keimsubstrat und Düngemittel über die behandelte Bodenfläche ist die Folge.

Ferner kann eine Über- bzw. Unterdosierung durch zu hohe oder geringe Schichtdicken bei der Ausbringung nicht ausgeschlossen werden. Vor einer Überdosierung muss ausdrücklich gewarnt werden. Ferner ist es schwierig, eine gleichmäßige Schichtdicke zu erreichen und die Schichtdicke optimal einzustellen.

Entsprechend sind flächige Substrate entwickelt worden, die beispielsweise in DE-A-10 2006 038 901 A1 beschrieben sind. Die beschriebenen Substrate basieren auf Zellulosefasern, wobei auch Naturfasern eingesetzt werden können, die nur einen gewissen Anteil an Zellulose enthalten. Unter anderem sind Kokosfasern und andere Naturfasern aufgeführt. Die Länge, Breite und Dicke der entsprechenden Platten oder Formkörper wird bevorzugt jeweils mit 10 cm bis 200 cm angegeben. Für ein plattenförmiges Substrat wird eine Dicke im Bereich von 1 bis 40 cm, vorzugsweise 5 bis 30 cm angegeben.

Das Vorsehen von Saatenträgern und Sattenträger-retardierenden Nährstoffträgern ist ebenfalls angegeben. Auf eine Anwendung zur Ausbesserung und Reparatur von Kahlstellen und Lücken in bestehenden Rasenflächen gibt es jedoch keinen Hinweis.

JP H09 154399 A betrifft eine Kulturbodenmatte, die Kokosnussschalen enthält. Die Kulturbodenmatte ist dreischichtig aufgebaut und in einem Kunststoffbehältnis gelagert. Alle drei Schichten sind aus Kokosfasern aufgebaut, wobei die mittlere Schicht neben Kokosfasern (7) auch Saat (6) und Düngemittel (8) enthält, während die unterste Schicht Kokosfasern (7) und Düngemittel (8) enthält. Diese unterste Schicht weist eine Dicke von 10 bis 80 mm auf, die mittlere Schicht eine Dicke von 3 bis 15 mm und die Deckschicht eine Dicke von 0,8 bis 13 mm. Damit weist die gesamte, dreischichtige Fasermatte eine Mindestdicke von 13,8 mm auf und eine Maximaldicke von 108 mm.

KR 2007 0034243 A betrifft eine Pflanzmatte, um Rasen in erdbodenfreiem Raum wie Betonboden oder Veranden ohne Aufbringung von Erdboden anzupflanzen. Es wird ein vielschichtiger Aufbau verwendet, der Rasensaat (1) in Schicht (10-1) beinhaltet. Düngemittel (3) wird in Schichten (40) eingebracht, die benachbart zur Rasensaat enthaltenden Schicht (10-1) liegen.

KR 2009-0008141 U beschreibt ein Pad, in das Samen eingebracht werden. Um die Keimung der Samen zu verhindern, wird eine Keimungsschicht eingetragen, die die Feuchtigkeit aufnimmt.

Der vielschichtige Aufbau wird durch flüssigkeits- und Wurzel-undurchlässige Kunststoffschichten abgeschlossen.

Die Gesamtdicke liegt über 45 mm, da die Untergrenzen für die Schichten (20), (40) und (50) mit 5 mm, 20 mm und 20 mm angegeben sind. Wie in der Figur angegeben, liegen zudem die Schichten (10) und (10-1) sowie die Kunststofffasermatte (60) vor, und die Schicht (40) tritt zweifach auf. Daher ist in der Praxis von einer deutlich größeren Gesamtschichtdicke als 45 mm auszugehen. Neben der Vielzahl von Schichten wird der Aufbau auch dadurch verkompliziert, als Düngemittel in andere Schichten eingebracht werden muss als die Rasensaat.

Die Bodenmatte dient dazu, Rasen an Stellen anzupflanzen, die keinen Erdboden aufweisen, beispielsweise Betonboden oder Veranden.

Aufgabe der vorliegenden Erfindung ist die Bereitstellung von Mitteln zur Ausbesserung und Reparatur von Kahlstellen und Lücken in bestehenden Rasenflächen, das die Nachteile der bekannten Granulate vermeidet, sehr einfach in der Anwendung ist und die Gefahr einer Entmischung und Über- bzw. Unterdosierung vermeidet. Auch eine gleichmäßige Verteilung aller Inhaltsstoffe auf der gesamten Kahlstelle mit gleichbleibender prozentualer Zusammensetzung an Substrat, Saat und Düngemittel soll möglich sein.

Die Aufgabe wird erfindungsgemäß gelöst durch ein getrocknetes und komprimiertes Rasen-Pad gemäß Anspruch 1.

Das erfindungsgemäße Rasen-Pad ist bereits auslegefähig vorkonfektioniert und weist eine perfekte abgestimmte Dosierung und Zusammensetzung zur Ausbesserung kleinerer Lücken im Rasen auf. Die Anwendung ist denkbar einfach:
Ein oder mehrere Rasen-Pads werden auf der geebneten Kahlstelle ausgelegt und gewässert. Bei einer Hellverfärbung des Rasen-Pads muss nachgewässert werden. Die Notwendigkeit einer Bewässerung ist damit optisch einfach zu kontrollieren.

Das Rasen-Pad hat vorzugsweise eine Fläche von 200 bis 600 cm², besonders bevorzugt 300 bis 500 cm². Dabei beträgt die Länge des getrockneten komprimierten Faserkissens vorzugsweise das 1- bis 3-fache der Breite, besonders bevorzugt das 1- bis 2-fache der Breite. Besonders bevorzugt werden quadratische Faserkissen mit einer Kantenlänge von 15 bis 25 cm, vorzugsweise 17 bis 23 cm, beispielsweise 20 cm eingesetzt.

Bei sehr kleinen Lücken können zudem die Rasen-Pads auf die entsprechende Größe abgelängt oder gebrochen werden.

Das erfindungsgemäße Rasen-Pad weist eine Dicke des getrockneten und komprimierten Faserkissens bzw. getrockneten und komprimierten Rasen-Pads von 2 bis 6 mm, insbesondere 3 bis 5 mm auf. Die Dicke kann beispielsweise 4 mm betragen.

Es war überraschend, dass derart dünne Faserkissen auf Basis von Kokstorf und/oder Kokosfasern mechanisch stabil sind, ohne bei der Lagerung, dem Versand oder der Ausbringung zu zerbrechen oder zu pulverisieren.

Gegenüber Flocken oder Granulat aus Kokostorf und/oder Kokosfasern weist das Faserkissen den weiteren Vorteil auf, dass Unkrautwuchs durch die durchgehende Oberfläche stärker gehindert ist. Beim Vorsehen einer Granulatschüttung ist ein Durchwachsen von Unkraut aus dem Erdboden an die Substratoberfläche einfacher möglich.

Das erfindungsgemäße Rasen-Pad umfasst drei wesentliche Komponenten: Getrocknetes und komprimiertes Faserkissen, Rasensaat und Düngemittelgranulat.

Das getrocknete und komprimierte Faserkissen basiert auf Kokostorf (cocopeat) und/oder Kokosfasern (coir). Der Begriff "auf Basis von" bedeutet, dass das Faserkissen zu mindestens 50 Gew.-% aus Kokostorf und/oder Kokosfasern aufgebaut ist. Vorzugsweise ist das getrocknete und komprimierte Faserkissen zu mindestens 70 Gew.-%, besonders bevorzugt zu mindestens 80 Gew.-%, insbesondere zu mindestens 90 Gew.-% aus Kokostorf (cocopeat) und/oder Kokosfasern (coir) aufgebaut bzw. enthält diese in den angegebenen Mengen.

Als Kokosfasern oder coir werden die Fasern bezeichnet, die aus der äußeren Umhüllung der Kokosnuss, dem Mesokarp, gewonnen werden. Dabei kann der Mesokarp zunächst zur Verwertung des Pektins in Wasser gelagert werden. Dieser Prozess wird auch als Röstung bezeichnet. Nach der Röstung können die Fasern durch Klopfen gelöst und, falls gewünscht, sortiert werden.

Kokosfasern bestehen zu etwa 45 Gew.-% aus Lignin und zu etwa 44 Gew.-% aus Zellulose. Dabei weisen die Fasern von reifen und vollreifen Früchten einen höheren Holzanteil auf. Kokosfasern werden auch aufgrund ihrer günstigen Anwendungseigenschaften als torffreies Pflanzsubstrat im Gartenbau verwendet (Kokostorf). Hierzu kann auf das Stichwort "Kokosfaser" in de.wikipedia.org verwiesen werden.

Der Kokostorf wird auch als "Cocopeat" bezeichnet, der im Englischen auch als coir pith, coir fibre pith, coir dust oder coir bezeichnet wird. Dabei wird coir-Abfall aus der Kokosfaserproduktion gewaschen, wärmebehandelt, nach Größe gesiebt und anschließend in Cocopeat-Produkte überführt. Es wird als Pflanzmedium eingesetzt, wobei der Zusatz eines Langzeitdüngemittels oder organischen Düngemittels empfohlen wird, siehe en.wikipedia.org, Stichwort "Coco_peat".

Erfindungsgemäß können alle aus der Kokosnuss stammenden Lignin/Zellulose-Stoffe eingesetzt werden, die komprimierbar sind. Sie werden beispielsweise auch als Kokosfaserstaub, Kokosnussschalenmesocarp, im Englischen Cocopeat, coir fibre dust, coconut husk mesocarpus bezeichnet. Gängige Begriffe sind auch das Mark der Kokosfaser (coir pith), coir fibre pith, coir dust bzw. Kokosfaser (coir).

Auf Basis dieser Kokosprodukte wird ein Faserkissen hergestellt, das zur Herstellung des Rasen-Pads getrocknet und komprimiert wird. Die Trocknung ist erforderlich, um eine vorzeitige Keimung der Rasensaat und ein Auflösen des Düngemittels zu verhindern. Zudem sind Trocknung und Komprimierung sinnvoll, um die Raumerfüllung des Rasen-Pads zu minimieren, so dass Lagerung und Transport des Rasen-Pads vereinfacht werden. In der Anwendung wird durch Zugabe von Wasser (Gießen) zum Faserkissen dieses dekomprimiert. Es dehnt sich zu einer lockeren Struktur aus, die ausreichenden Luftzutritt gewährleistet und ein hohes Wasserrückhaltevermögen hat.

Zur Beschreibung von Cocopeat kann auch auf ecopeat.com verwiesen werden. Dort wird beschrieben, dass Cocopeat aus faserförmigen Kokosschalen (coconut husk) hergestellt wird durch Vorwaschen, maschinelles Trocknen, Sieben und Befreien von Sand- und anderen Verunreinigungen, wie Tier- und Pflanzenresten. Zur Herstellung von Cocopeat wird die faserförmige Kokosnussschale zum Weichmachen in Wasser getränkt und anschließend geschlagen, um die Kokosfaser zu erhalten, die zur Herstellung von Seilen, Matten usw. verwendet wird. Der zurückbleibende Staub (dust or coir fibre pith) wird zur Herstellung von Cocopeat eingesetzt.

Gerade Cocopeat lässt sich sehr gut komprimieren und nachfolgend, selbst nach sehr langer Lagerung, mittels Wasserzusatz auf nahezu das Ursprungsvolumen wieder expandieren. Zudem ist es ein festes, leichtes und einfach zu handhabendes Produkt, das sehr gute Wasserabsorptions- und Retentionseigenschaften aufweist, eine sehr gute luftgefüllte Porosität hat und die Rasenkeimung und das Rasenwachstum schützend und versorgend unterstützt.

Der Wassergehalt des getrockneten und komprimierten Faserkissens liegt bevorzugt im Bereich von 12 bis 13 Gew.-%.

Um ein gutes Bindeverhalten während des Komprimierens und gleichzeitig eine gute Expansion beim nachfolgenden Wässern sicherzustellen, sollte das Cocopeat auf den genannten Wassergehalt getrocknet werden.

Das Cocopeat wird anhand seiner elektrischen Leitfähigkeit (Electrical Conductivity (EC)), seiner Struktur und Körnung ausgewählt bzw. aus mehreren Qualitäten gemischt, um eine gute Stabilität des komprimierten Rasen-Pads zu gewährleisten und gleichzeitig ein gutes Aufquellen und eine gute Aeration nach dem Aufquellen. Auch das Wasserhaltevermögen ist wichtig.

Grobes Cocopeat hat eine positive Wirkung auf die Keimung der Rasensaat, aber eine negative Wirkung auf das Wurzelwachstum und die Verankerung der Wurzeln. Hier hat feines Cocopeat einen Vorteil. Daher enthält der erfindungsgemäß eingesetzte Rasen-Pad eine Mischung aus grobem und feinem Cocopeat.

Eine hohe elektrische Leitfähigkeit (hoher EC-Wert) erhöht die Keimungsgeschwindigkeit. Danach tritt jedoch erfindungsgemäß die Wirkung des Düngemittels hinzu. Wenn die Dosierung des Düngemittels zu hoch ist, kann bei einem Cocopeat mit hohem EC-Wert der hohe Salzgehalt das Pflanzenwachstum beeinträchtigen.

Erfindungsgemäß einsetzbare Cocopeat-Materialien weisen beispielsweise für ein Cocopeat mit niedrigem EC-Wert eine elektrische Leitfähigkeit von weniger als 1 mS/cm und einen pH-Wert im Bereich von 5,5 bis 6,5 auf. Der Gehalt an Sand oder anderen Verunreinigungen beträgt weniger als 5 Gew.-%, der Anteil an kurzen Fasern weniger als 5 Gew.-%, der Feuchtegehalt weniger als 15 Gew.-%. Die Wasserhaltekapazität sollte mindestens 300 %, bezogen auf das Ausgangsgewicht, betragen.

Ungewaschenes Cocopeat mit hohem EC-Wert kann beispielsweise eine elektrische Leitfähigkeit von 2 bis 3 mS/cm bei einem pH-Wert im Bereich von 5,5 bis 6,5 aufweisen.

Sand und andere Verunreinigungen machen vorzugsweise weniger als 5 Gew.-%, kurze Fasern weniger als 5 Gew.-%, Feuchtigkeit weniger als 15 Gew.-% aus. Die Wasserhaltekapazität beträgt wiederum vorzugsweise mindestens 300 Gew.-%.

Eine weitere Cocopeat-Qualität hat ein Kompressionsverhältnis von 5 : 1, eine elektrische Leitfähigkeit von weniger als 0,6 mS/cm, einen pH-Wert im Bereich von 5,5 bis 6,7, eine Siebgröße von 6 MM Mesh, einen Feuchtegehalt von 10 bis 16 Gew.-%, und eine luftgefüllte Porosität von 90 %. Die Wasserhaltekapazität beträgt wiederum mindestens 300 Gew.-%, bezogen auf das trockene Cocopeat.

Für kleinere Cocopeat-Chargen kann auch eine höhere Kompression von bis zu 8 : 1 angewendet werden.

Je nach gewünschten Anwendungseigenschaften können unterschiedliche Cocopeat-Materialien miteinander kombiniert werden.

Im erfindungsgemäßen Rasen-Pad kann jedes beliebige geeignete Düngemittelgranulat eingesetzt werden, das zur Bildung von Rasen geeignet ist. Bekannt sind beispielsweise mineralische Ein- und Mehrnährstoffdünger wie Stickstoffdünger, Kalidünger, Kalkdünger und Magnesiumdünger. Für eine weitere Beschreibung der Düngemittel kann auf DE-A-10 2006 038 901, Absätze [0025] bis [0036] wie auch auf US 7,587,856 B2 verwiesen werden. Vorzugsweise ist das Düngemittelgranulat ein Langzeit-NPK-Düngemittelgranulat.

Besonders bevorzugt wird ein Langzeit-NPK-Düngemittel eingesetzt, das Isobutylidendiharnstoff (IBDU-N) enthält. Der Anteil des Isobutylidendiharnstoffs am Düngemittelgranulat beträgt vorzugsweise 20 bis 60 Gew.-%, besonders bevorzugt 30 bis 50 Gew.-%. Die Verhältnisse von N, P und K im Düngemittel können nach praktischen Anforderungen gewählt werden. Beispielsweise können 16-7-15 oder 19-5-10 NPK-Düngemittel eingesetzt werden. Vorzugsweise enthalten die Düngemittel ferner geringe Mengen MgO, S, Fe und TE. Beispiele besonders geeigneter Düngemittel sind Floranid^{®} Permanent und Floranid^{®} Master extra der COMPO GmbH und Co. KG.

Das Düngemittelgranulat weist vorzugsweise eine mittlere Teilchengröße im Bereich von 0,3 bis 4 mm, besonders bevorzugt 0,4 bis 3 mm, insbesondere 0,5 bis 2,8 mm auf.

Besonders bevorzugt ist ein 16-7-15-NPK-Düngemittel mit 2 % MgO, 9 % S, 0,5 % Fe, TE und 37 Gew.-% IBDU-N, das eine Teilchengröße von 0,7 bis 2,8 mm aufweist. Ebenfalls besonders bevorzugt einsetzbar ist ein 19-5-10-NPK-Düngemittel mit 2 Gew.-% MgO, 8 Gew.-% S, 0,5 Gew.-% Fe, TE sowie 45 Gew.-% IBDU-N mit einer Granulatteilchengröße im Bereich von 0,5 bis 1,8 mm.

Das bevorzugt eingesetzte Düngemittel ist speziell geeignet, um das Graswachstum zu stimulieren. Da diese Düngemittelgranulate typischerweise hygroskopisch sind, sollte bei der Lagerung und Handhabung auf geringen Feuchtigkeitseintrag geachtet werden.

Als Rasensaat kann jede beliebige geeignete Rasensaat eingesetzt werden.

Rasen bezeichnet allgemein eine anthropogene Vegetationsdecke aus Gräsern, die durch Wurzeln und Ausläufer mit der Vegetationstragschicht verbunden ist. Die Vegetationsdecke liegt im Siedlungsgebiet des Menschen und wird typischerweise nicht landwirtschaftlich genutzt. Rasensaat bezeichnet die Saat der Vegetationsdecke, aus der Rasen besteht.

Vorzugsweise wird eine hochwertige Rasensaat eingesetzt, die zur Ausbesserung aller bekannten Rasentypen geeignet ist. Typischerweise wird Rasensaat in Form von Saatgut-Mischungen angeboten und angewendet. Diese Mischungen können nach den Verwendungszwecken der Rasenflächen untergliedert sein. Typische Rasengräserarten sind Deutsches Weidelgras (Lolium perenne), Rispengras (Poa), Schwingel (Festuca) und Straußgras (Agrostis).

Eine Sportrasenmischung besteht beispielsweise aus 40 Gew.-% Deutschem Weidelgras (Lolium perenne, in zwei oder mehr Sorten) und 60 Gew.-% Wiesen-Rispengras (Poa pratensis, in zwei oder mehr Sorten). Aus Gründen des Ausfallrisikos werden typischerweise keine Reinsaaten verwendet.

Ein Sportrasen besteht häufig aus Mischungen, die vorwiegend auf Deutschem Weidelgras (Lolium perenne) und Wiesen-Rispe (Poa pratensis) basieren.

Für Sonderzwecke kommen auch der Rohr-Schwingel (Festuca arundinacea) aufgrund seiner Toleranz gegenüber Nässe und das Läger-Rispengras (Poa supina) mit seiner hohen Schattenverträglichkeit in Betracht.

Für einen Golfplatz werden häufig das Rote Straußgras (Agrostis capillaris), das Weiße Straußgras (Agrostis stolonifera) und gewöhnlicher Rot-Schwingel (Festuca rubra) eingesetzt. Für Sonderflächen kommen auch Poa pratensis und Lolium perenne in Betracht.

Aufgrund der schnellkeimenden Eigenschaften wird im erfindungsgemäßen Rasen-Pad in der Rasensaat ein großer Anteil an Lolium perenne vorgesehen, der beispielsweise im Bereich von 10 bis 90 Gew.-% liegen kann. Hierdurch wird sichergestellt, dass die Rasenlücke möglichst schnell durch Rasengrün geschlossen wird.

Besonders bevorzugt enthält die Rasensaat
- 10 - 50 Gew.-%, vorzugsweise 20 - 40 Gew.-%, besonders bevorzugt 25 - 35 Gew.-% Lolium perenne Esquire,
- 10 - 50 Gew.-%, vorzugsweise 20 bis 40 Gew.-%, besonders bevorzugt 25 - 35 Gew.-% Lolium perenne Cleopatra,
- 10 - 40 Gew.-%, vorzugsweise 15 - 35 Gew.-%, besonders bevorzugt 20 - 30 Gew.-% Lolium perenne Tetragrün und
- 5 - 30 Gew.-%, vorzugsweise 5 bis 25 Gew.-%, besonders bevorzugt 10 - 20 Gew.-% Poa pratensis Miracle, deren Summe 100 Gew.-% ergibt.

Das erfindungsgemäße eingesetzte Gemisch an Grassamen führt zu einer schnellen Keimung und schnellem Wachstum in westlichen und mitteleuropäischen Ländern.

Auch der Einsatz anderer bekannter Rasensaaten ist erfindungsgemäß möglich.

Ein erfindungsgemäßes Rasen-Pad enthält vorzugsweise
- 75 - 97,5 Gew.-%, vorzugsweise 80 - 94 Gew.-%, besonders bevorzugt 85 - 92 Gew.-% des getrockneten und komprimierten Faserkissens,
- 2 - 10 Gew.-%, vorzugsweise 5 - 8 Gew.-%, besonders bevorzugt 6 - 7 Gew.-% der Rasensaat,
- 0,5 - 5 Gew.-%, vorzugsweise 1 - 4 Gew.-%, besonders bevorzugt 2 - 3 Gew.-% des Düngemittelgranulats und
- 0 - 10 Gew.-%, vorzugsweise 0 - 5 Gew.-%, besonders bevorzugt 0 bis 3 Gew.-% weitere Zusatzstoffe, deren Summe 100 Gew.-% ergibt.

Weitere Zusatzstoffe können beispielsweise Bodenhilfsstoffe wie Gesteinsmehl, Ton, Bentonit, Biolith usw. sein wie auch Feuchtigskeits-aufnehmende synthetische Polymere wie sie beispielsweise in US 7,587,856 B2 beschreiben sind. Dabei handelt es sich typischerweise um Oligomere auf Basis von Acrylsäure. Weitere Hilfsstoffe sind in DE-A-10 2006 038 901 in Absatz [0046] beschrieben.

Ferner können Emulgatoren oder Tenside wie nicht-ionische Tenside mitverwendet werden, siehe US 7,587,856, Absatz [0028]. Auch wasserlösliche Bindemittel können eingesetzt werden, wie sie in US 7,587,856 beispielsweise in Absatz [0029] beschrieben sind. Geeignete synthetische Polymere sind beispielsweise in US 7,587,856 in Absatz [0026] und [0027] beschrieben.

Die Herstellung der erfindungsgemäßen Rasen-Pads kann nach beliebigen geeigneten Verfahren erfolgen. Prinzipielle Verfahrensweisen sind beispielsweise in DE-A-10 2006 038 901 beschrieben. Für die Vermischungs- und Komprimierungsstufen kann zudem auf US 7,587,856 verwiesen werden.

Ein erfindungsgemäßes Verfahren zur Herstellung eines erfindungsgemäßen Rasen-Pads umfasst die mechanische Vermischung der trockenen oder getrockneten, nicht-komprimierten Inhaltsstoffe und das nachfolgende Komprimieren.

Um eine gleichbleibende Zusammensetzung im Rasen-Pad sicherzustellen, werden bevorzugt die zur Herstellung jeweils eines einzelnen Pads benötigten Mengen der Inhaltsstoffe separat dosiert, vermischt und nachfolgend in eine Pressform gegeben.

Bei der Herstellung der Rasen-Pads wird vorzugsweise eine vertikale Presse eingesetzt, Vorzugsweise werden mehrere Pads, beispielsweise 5 bis 15 Pads simultan in einer Form komprimiert.

Der angewandte Druck wird so eingestellt, dass das Cocopeat sich verbindet und der komprimierte Zustand haltbar ist, andererseits die Grassamen nicht geschädigt werden und beim nachfolgenden Wässern das Rasen-Pad schnell und möglichst vollständig expandiert.

Die Dicke nach der Kompression sollte so gering wie möglich sein, um Lagerung und Transport zu vereinfachen.

Vorzugsweise werden die Kanten des Rasen-Pads stärker als der innere Bereich des Pads komprimiert, um die Festigkeit des Pads zu erhöhen. Bevorzugt werden die Ecken des Pads abgerundet, um sie weniger hochempfindlich zu machen.

Die Erfindung betrifft auch die Verwendung eines erfindungsgemäßen Rasen-Pads zur Ausbesserung und Reparatur von Kahlstellen und Lücken in bestehenden Rasenflächen.

Das erfindungsgemäße Rasen-Pad erlaubt eine schnelle Keimung des Rasens und ein starkes Wurzelwachstum, so dass Kahlstellen und Lücken in bestehenden Rasenflächen schnell, zuverlässig und nachhaltig verschlossen werden. Das Rasen-Pad wird nach der Expansion nicht zu dick, so dass eine gleichmäßige Höhe der gesamten Rasenfläche erhalten bleibt.

Die Erfindung wird nachstehend durch ein Ausführungsbeispiel näher erläutert.

### Beispiel

Es wird ein Rasen-Pad in einer Größe von 20 x 20 cm hergestellt, das nach der Komprimierung eine Dicke von 4 mm aufweist und nach der Wässerung nach der Anwendung eine Dicke im Bereich von 16 bis 17 mm aufweist.

Eingesetzt werden Cocopeat (coir fibre dust, coconut husk mesocarpus): 70 g Der Wassergehalt des eingesetzten Cocopeat beträgt 12 bis 13 Gew.-%.
Floranid^{®} Master Extra Düngemittelgranulat: 1,5 g
Grassaatmischung: 5 g

Die Grassaatmischung enthielt 30 Gew.-% Lolium perenne Esquire, 30 Gew.-% Lolium perenne Cleopatra, 25 Gew.-% Lolium perenne Tetragreen und 15 Gew.-% Poa pratensis Miracle.

Die Inhaltsstoffe wurden in einer zur Herstellung des Pads erforderlichen Menge miteinander vermischt und in einer vertikalen Presse in eine geeignete Form komprimiert.

Sie zeigen bei der Anwendung die eingangs beschriebenen Vorteile.

## Patentansprüche

1. Getrocknetes und komprimiertes Rasen-Pad mit einer Dicke von 2 bis 6 mm, umfassend
- ein getrocknetes und komprimiertes Faserkissen auf Basis von Kokostorf (cocopeat) und/oder Kokosfasern (coir) mit einem Wassergehalt von maximal 20 Gew.-%, einer Fläche, definiert als Produkt aus Länge und Breite, im Bereich von 200 bis 600 cm², einer Dicke im komprimierten Zustand von 2 bis 6 mm und einer auf mindestens das Dreifache erhöhten Dicke nach Wasserzusatz und Expansion,
- in das getrocknete und komprimierte Faserkissen eingebrachte oder auf dieses aufgebrachte Rasensaat,
- in das getrocknete und komprimierte Faserkissen eingebrachtes oder auch auf dieses aufgebrachtes Düngemittelgranulat, wobei der Wassergehalt des getrockneten und komprimierten Faserkissens 10 bis 15 Gew.-% beträgt.

2. Rasen-Pad nach Anspruch 1, **dadurch gekennzeichnet, dass** die Fläche des getrockneten und komprimierten Faserkissens 200 bis 600 cm², vorzugsweise 300 bis 500 cm² beträgt.

3. Rasen-Pad nach Anspruch 1 oder 2, **dadurch gekennzeichnet, dass** die Länge des getrockneten und komprimierten Faserkissens das 1- bis 3-fache der Breite beträgt.

4. Rasen-Pad nach einem der Ansprüche 1 bis 3, **dadurch gekennzeichnet, dass** die Dicke des getrockneten und komprimierten Faserkissens 3 bis 5 mm, beträgt.

5. Rasen-Pad nach einem der Ansprüche 1 bis 4, **dadurch gekennzeichnet, dass** das Düngemittelgranulat ein Langzeit-NPK-Düngemittelgranulat ist.

6. Rasen-Pad nach einem der Ansprüche 1 bis 5, **dadurch gekennzeichnet, dass** das Düngemittelgranulat Isobutylidendiharnstoff enthält.

7. Rasen-Pad nach einem der Ansprüche 1 bis 6, **dadurch gekennzeichnet, dass** das Düngemittelgranulat eine mittlere Teilchengröße im Bereich 0,3 bis 4 mm, vorzugsweise 0,4 bis 3 mm, insbesondere 0,5 bis 2,8 mm aufweist.

8. Rasen-Pad nach einem der Ansprüche 1 bis 7, **dadurch gekennzeichnet, dass** es
- 75 - 97,5 Gew.-%, vorzugsweise 80 - 94 Gew.-%, besonders bevorzugt 85 - 92 Gew.-% des getrockneten und komprimierten Faserkissens,
- 2 - 10 Gew.-%, vorzugsweise 5 - 8 Gew.-%, besonders bevorzugt 6 - 7 Gew.-% der Rasensaat,
- 0,5 - 5 Gew.-%, vorzugsweise 1 - 4 Gew.-%, besonders bevorzugt 2 - 3 Gew.-% des Düngemittelgranulats und
- 0 - 10 Gew.-%, vorzugsweise 0 - 5 Gew.-%, besonders bevorzugt 0 bis 3 Gew.-% weitere Zusatzstoffe enthält,
deren Summe 100 Gew.-% ergibt.

9. Rasen-Pad nach einem der Ansprüche 1 bis 8, **dadurch gekennzeichnet, dass** die Rasensaat
- 10 - 50 Gew.-%, vorzugsweise 20 - 40 Gew.-%, besonders bevorzugt 25 - 35 Gew.-% Lolium perenne Esquire,
- 10 - 50 Gew.-%, vorzugsweise 20 bis 40 Gew.-%, besonders bevorzugt 25 - 35 Gew.-% Lolium perenne Cleopatra,
- 10 - 40 Gew.-%, vorzugsweise 15 - 35 Gew.-%, besonders bevorzugt 20 - 30 Gew.-% Lolium perenne Tetragrün und
- 5 - 30 Gew.-%, vorzugsweise 5 bis 25 Gew.-%, besonders bevorzugt 10 - 20 Gew.-% Poa pratensis Miracle enthält,
deren Summe 100 Gew.-% ergibt.

10. Rasen-Pad nach einem der Ansprüche 1 bis 9, **dadurch gekennzeichnet, dass** das getrocknete und komprimierte Faserkissen mindestens 70 Gew.-%, vorzugsweise mindestens 80 Gew.-%, besonders bevorzugt mindestens 90 Gew.-% Kokostorf (cocopeat) und/oder Kokosfasern (coir) enthält.

11. Verfahren zur Herstellung eines Rasen-Pads nach einem der Ansprüche 1 bis 10, **dadurch gekennzeichnet, dass** man die trockenen oder getrockneten, nicht komprimierten Inhaltsstoffe miteinander mechanisch vermischt und nachfolgend komprimiert.

12. Verfahren nach Anspruch 11, **dadurch gekennzeichnet, dass** die zur Herstellung jeweils eines einzelnen Pads benötigte Menge der Inhaltsstoffe separat dosiert, vermischt und nachfolgend in eine Pressform gegeben wird.

13. Verwendung eines Rasen-Pads nach einem der Ansprüche 1 bis 10 zur Ausbesserung und Reparatur von Kahlstellen und Lücken in bestehenden Rasenflächen.

## Claims

1. Dried and compressed turf pad with a thickness of from 2 to 6 mm, comprising
- a dried and compressed fibre cushion based on coco peat and/or coir with a water content of not more than 20% by weight, an area, defined as the product of length and width, in the range of from 200 to 600 cm², a thickness, in the compressed state, of from 2 to 6 mm, and a thickness which, following the addition of water and expansion, is increased to at least three times as much,
- turf seed introduced into or applied onto the dried and compressed fibre cushion,
- fertilizer granules introduced into or else applied onto the dried and compressed fibre cushion where the water content of the dried and compressed fibre cushion amounts to from 10 to 15% by weight.

2. Turf pad according to Claim 1, **characterized in that** the area of the dried and compressed fibre cushion amounts to from 200 to 600 cm², preferably from 300 to 500 cm².

3. Turf pad according to Claim 1 or 2, **characterized in that** the length of the dried and compressed fibre cushion is 1 to 3 times its width.

4. Turf pad according to one of Claims 1 to 3, **characterized in that** the thickness of the dried and compressed fibre cushion amounts to 3 to 5 mm.

5. Turf pad according to one of Claims 1 to 4, **characterized in that** the fertilizer granules are slow-release NPK fertilizer granules.

6. Turf pad according to one of Claims 1 to 5, **characterized in that** the fertilizer granules contain isobutylidenediurea.

7. Turf pad according to one of Claims 1 to 6, **characterized in that** the fertilizer granules have a mean particle size in the range of from 0.3 to 4 mm, preferably from 0.4 to 3 mm, in particular from 0.5 to 2.8 mm.

8. Turf pad according to one of Claims 1 to 7, **characterized in that** it contains
- 75-97.5% by weight, preferably 80-94% by weight, especially preferably 85-92% by weight, of the dried and compressed fibre cushion,
- 2-10% by weight, preferably 5-8% by weight, especially preferably 6-7% by weight of the turf seed,
- 0.5-5% by weight, preferably 1-4% by weight, especially preferably 2-3% by weight, of the fertilizer granules and
- 0-10% by weight, preferably 0-5% by weight, especially preferably 0 to 3% by weight of further additives,
the total of which amounts to 100% by weight.

9. Turf pad according to one of Claims 1 to 8, **characterized in that** the turf seed contains
- 10-50% by weight, preferably 20-40% by weight, especially preferably 25-35% by weight Lolium perenne Esquire,
- 10-50% by weight, preferably 20 to 40% by weight, especially preferably 25-35% by weight Lolium perenne Cleopatra,
- 10-40% by weight, preferably 15-35% by weight, especially preferably 20-30% by weight Lolium perenne Tetragrün and
- 5-30% by weight, preferably 5 to 25% by weight, especially preferably 10-20% by weight Poa pratensis Miracle,
the total of which amounts to 100% by weight.

10. Turf pad according to one of Claims 1 to 9, **characterized in that** the dried and compressed fibre cushion contains at least 70% by weight, preferably at least 80% by weight, especially preferably at least 90% by weight, of coco peat and/or coir.

11. Method of manufacturing a turf pad according to one of Claims 1 to 10, **characterized in that** the dry or dried, uncompressed constituents are mechanically mixed with each other and the mixture is subsequently compressed.

12. Method according to Claim 11, **characterized in that** the constituents required for manufacturing in each case a single pad are metered separately, mixed, and the mixture is subsequently introduced into a pressing mould.

13. Use of a turf pad according to one of Claims 1 to 10 for patching and repairing bare patches and gaps in existing turf areas.

## Revendications

1. Carré de gazon séché et comprimé, présentant une épaisseur de 2 à 6 mm, comprenant :
- un coussin de fibres séché et comprimé à base de tourbe de coco (cocopeat) et/ou de fibres de coco (coir) ayant une teneur en eau d'au plus 20 % en poids, une surface, définie comme le produit de la longueur et de la largeur, dans la plage allant de 200 à 600 cm², une épaisseur à l'état comprimé de 2 à 6 mm et une épaisseur au moins triplée après l'ajout d'eau et l'expansion,
- des graines de gazon introduites dans le coussin de fibres séché et comprimé, ou appliquées sur celui-ci,
- des granulés d'engrais introduits dans le coussin de fibres séché et comprimé, ou appliqués sur celui-ci, la teneur en eau du coussin de fibres séché et comprimé étant de 10 à 15 % en poids.

2. Carré de gazon selon la revendication 1, **caractérisé en ce que** la surface du coussin de fibres séché et comprimé est de 200 à 600 cm², de préférence de 300 à 500 cm².

3. Carré de gazon selon la revendication 1 ou 2, **caractérisé en ce que** la longueur du coussin de fibres séché et comprimé est de 1 à 3 fois la largeur.

4. Carré de gazon selon l'une quelconque des revendications 1 à 3, **caractérisé en ce que** l'épaisseur du coussin de fibres séché et comprimé est de 3 à 5 mm.

5. Carré de gazon selon l'une quelconque des revendications 1 à 4, **caractérisé en ce que** les granulés d'engrais sont des granulés d'engrais NPK de longue durée.

6. Carré de gazon selon l'une quelconque des revendications 1 à 5, **caractérisé en ce que** les granulés d'engrais contiennent de l'isobutylidène-diurée.

7. Carré de gazon selon l'une quelconque des revendications 1 à 6, **caractérisé en ce que** les granulés d'engrais présentent une taille de particules moyenne dans la plage allant de 0,3 à 4 mm, de préférence de 0,4 à 3 mm, notamment de 0,5 à 2,8 mm.

8. Carré de gazon selon l'une quelconque des revendications 1 à 7, **caractérisé en ce qu'**il contient :
- 75 à 97,5 % en poids, de préférence 80 à 94 % en poids, de manière particulièrement préférée 85 à 92 % en poids, du coussin de fibres séché et comprimé,
- 2 à 10 % en poids, de préférence 5 à 8 % en poids, de manière particulièrement préférée 6 à 7 % en poids des graines de gazon,
- 0,5 à 5 % en poids, de préférence 1 à 4 % en poids, de manière particulièrement préférée 2 à 3 % en poids, des granulés d'engrais, et
- 0 à 10 % en poids, de préférence 0 à 5 % en poids, de manière particulièrement préférée 0 à 3 % en poids, d'additifs supplémentaires,
dont la somme est de 100 % en poids.

9. Carré de gazon selon l'une quelconque des revendications 1 à 8, **caractérisé en ce que** les graines de gazon contiennent :
- 10 à 50 % en poids, de préférence 20 à 40 % en poids, de manière particulièrement préférée 25 à 35 % en poids, de Lolium perenne Esquire,
- 10 à 50 % en poids, de préférence 20 à 40 % en poids, de manière particulièrement préférée 25 à 35 % en poids, de Lolium perenne Cleopatra,
- 10 à 40 % en poids, de préférence 15 à 35 % en poids, de manière particulièrement préférée 20 à 30 % en poids, de Lolium perenne Tetragrün, et
- 5 à 30 % en poids, de préférence 5 à 25 % en poids, de manière particulièrement préférée 10 à 20 % en poids, de Poa pratensis Miracle,
dont la somme est de 100 % en poids.

10. Carré de gazon selon l'une quelconque des revendications 1 à 9, **caractérisé en ce que** le coussin de fibres séché et comprimé contient au moins 70 % en poids, de préférence au moins 80 % en poids, de manière particulièrement préférée au moins 90 % en poids de tourbe de coco (cocopeat) et/ou de fibres de coco (coir).

11. Procédé de fabrication d'un carré de gazon selon l'une quelconque des revendications 1 à 10, **caractérisé en ce que** les composants secs ou séchés, non comprimés, sont mélangés mécaniquement les uns avec les autres, puis comprimés.

12. Procédé selon la revendication 11, **caractérisé en ce que** la quantité de composants nécessaire pour la fabrication d'un carré individuel est dosée séparément, mélangée, puis introduite dans un moule de pressage.

13. Utilisation d'un carré de gazon selon l'une quelconque des revendications 1 à 10 pour l'amélioration et la réparation de vides et d'espaces dans des surfaces en gazon existantes.
